# EUROPÄISCHE PATENTSCHRIFT

(11) **EP 1 514 706 B1**
(45) Veröffentlichungstag und Bekanntmachung des Hinweises auf die Patenterteilung: **17.01.2007**
(21) Anmeldenummer: 03019978.0
(22) Anmeldetag: 03.09.2003
(51) Int. Cl.: B60H 1/00, F16B 5/06, F16B 21/08

(54) **Rastverbindung von Gehäuseteilen**
Snap-in connection for a housing
Fixation par encliquetage pour un boîtier

(43) Veröffentlichungstag der Anmeldung: 16.03.2005
(73) Patentinhaber: Frape Behr S.A., 08040 Barcelona (ES)
(72) Erfinder: Bonjoch, Oriol, 08028 Barcelona (ES); Fuentes, Nicolas, 08859 Begues (ES)
(74) Vertreter: Grauel, Andreas

(56) Entgegenhaltungen:
- EP-A- 1 081 394
- DE-A- 2 908 104
- DE-U- 8 113 742
- GB-A- 1 443 037
- US-A1- 2002 070 216

## Beschreibung

Die Erfindung betrifft ein Klimagehäuse aus Gehäuseteilen mit einer Rasterverbindung nach dem Oberbegriff des Patentanspruches 1.

Heizung- oder Klimaanlagen für Kraftfahrzeuge sind in einem Kunststoffgehäuse angeordnet, welches aus mehreren nach der Montage zu verbindenden Gehäuseteilen besteht. Durch die DE 29 08 104 B2 wurde ein zweiteiliges Gehäuse für eine Heizungsanlage eines Kraftfahrzeuges bekannt, bei welcher die Gehäuseteile durch Schnellverschlüsse, bestehend aus Rastnasen und Haltebügeln an den beiden Gehäuseteilen, verbunden werden. Beim Montagevorgang werden die als flache Laschen ausgebildeten Schnellverschlüsse in die Haltebügel eingeführt, dabei vorzentriert, zentriert und beim Anschlag beider Gehäuseteile durch Rastnasen verrastet.

Eine andere Art der Rastverbindung für ein Gehäuse einer Kraftfahrzeugsheizungsanlage wurde durch die DE 81 13 742 U1 bekannt, wobei gleichzeitig eine Abdichtung beider Gehäuseteile durch eine Dichtung erfolgt. Die Rastverbindung ist als umlaufende Nut-Feder-Verbindung ausgebildet, wobei über den Umfang verteilte Rastnasen in Haltebügel eingeführt und mit diesen verrastet werden. Zusätzlich sind für die Verbindung beider Gehäuseteile Metallclipse vorgesehen. Die bekannten Rastverbindungen sind nicht für jeden Einsatzzweck geeignet, insbesondere können Beschädigungen oder Verformungen beim Transport der Gehäuseteile auftreten, welche die anschließende Montage erschweren. Darüber hinaus ist das Fügen und Verrasten der beiden Gehäusehälften infolge ihrer geringen Steifigkeit mit einem entsprechenden Aufwand an Sorgfalt bei der Montage verbunden.

Aus der GB 1 443 037 A ist ein Abstandshalter bekannt, der dazu ausgebildet ist, plattenähnliche Elemente, wie elektrisch gedruckte Schaltkreistafeln einander gegenüber zu beabstanden. Derartige Abstandshalter sind aus einem elastischen synthetischen Plastikmaterial ausgebildet. Der Abstandshalter weist einen Abstandshalterabschnitt auf, der zwischen einem Paar von plattenähnlichen Elementen derart anbringbar ist, dass diese Elemente zueinander einen Abstand aufweisen. Der Abstandshalter weist ein Sicherungselement mit einer röhrenförmigen Nocke und zumindest ein abstehendes Element auf, das Bestandteil der Seitenwand der röhrenförmigen Nocke ist.

Aus der EP 1 081 394 A2 ist ein Clips, insbesondere ein Blindniet, mit einer Gummidichtung und einem Stiftelement bekannt. Der Clips verhindert das Herausfallen des Stiftelements. Der Clips weist ferner einen axialen Abschnitt auf, der als Zylinder mit einer Aussparung ausgebildet ist. Ein derartiger Clips wird insbesondere zur Befestigung einer Deckenverstärkung an einem Deckenabschnitt eines Automobils eingesetzt.

Es ist Aufgabe der vorliegenden Erfindung, ein Klimagehäuse aus Gehäuseteilen mit einer Rastverbindung der eingangs genannten Art dahingehend zu verbessern, dass die Verbindungselemente robust ausgebildet und die Gehäuseteile einfach und mit geringem Aufwand ineinander fügbar sind.

Diese Aufgabe wird durch die Merkmale des Patentanspruches 1 gelöst. Erfindungsgemäß sind an einem Gehäuseteil Hohlzapfen mit Rastelementen und am anderen Gehäuseteil Aufnahmeöffnungen vorgesehen, in welche die Hohlzapfen eingeführt werden. Durch vorzugsweise konisch ausgebildete Einführschrägen an den Hohlzapfen lässt sich zunächst eine Vorzentrierung beider Gehäuseteile und bei weiterem Einführen eine Zentrierung erreichen. Am Ende der Einführbewegung, also beim Anschlag beider Gehäuseteile erfolgt eine Verrastung durch das in den Hohlzapfen integrierte Rastelement.

Die Funktionen Zentrieren bzw. Positionieren beider Gehäuseteile und das anschließende Verrasten sind somit in den Hohlzapfen integriert. Der Querschnitt des Hohlzylinders ist beliebig, zylindrisch oder prismatisch, rund oder eckig.

Nach einer vorteilhaften Ausgestaltung der Erfindung weist der Hohlzapfen an seinem Fuß eine Anschlagfläche auf, durch welche die Einführbewegung begrenzt und die Verrastung ausgelöst wird. Damit wird der Vorteil einer spielfreien Rastverbindung von zwei Gehäuseteilen erreicht.

Nach einer vorteilhaften Weiterbildung der Erfindung ist das Rastelement als längliche Rastzunge ausgebildet, die an einem Ende mit der Wandung des Hohlzapfens verbunden ist und an ihrem freien Ende eine Rastnase trägt. Die Rastzunge ist durch seitliche Längsschlitze von der Wandung des Hohlzapfens getrennt. Damit ergibt sich die erforderliche Elastizität der Rastzunge, sodass die Rastnase beim Einführen in die Aufnahmeöffnung des anderen Gehäuseteiles nach innen federn kann.

In weiterer Ausgestaltung der Erfindung, ist die Rastnase in axialer Richtung des Hohlzapfens in Richtung Fuß versetzt. Damit wird der Vorteil erreicht, dass der bzw. die Hohlzapfen eines Gehäuseteiles zunächst in die entsprechenden Aufnahmeöffnungen eingeführt und vorzentriert werden können; erst dann kommt die Rastnase mit der Aufnahmeöffnung in Kontakt und federt nach innen.

In weiterer Ausgestaltung der Erfindung weist der Hohlzapfen einen kreisringförmigen Querschnitt auf, in welchen der Querschnitt der Rastzunge integriert ist, d. h. die Rastzunge wird durch Anordnung von Längsschlitzen in der Hohlzylinderwandung gebildet. Damit ergibt sich der Vorteil eines robusten Führungs- und Rastelementes.

In weiterer Ausgestaltung der Erfindung sind die Hohlzapfen mit Rastelementen einstückig mit den entsprechenden Gehäuseteilen als Kunststoffspritzteile herstellbar. Damit wird der Vorteil erreicht, dass keine zusätzlichen Befestigungselemente, wie z. B. Metallclipse erforderlich sind.

Ein Ausführungsbeispiel der Erfindung ist in der Zeichnung dargestellt und wird im Folgenden näher beschrieben. Es zeigen
- Fig. 1, Fig. 1a, Fig. 1b und Fig. 1c: ein Gehäuseteil mit drei erfindungsgemäßen Hohlzapfen,
- Fig. 2: den Hohlzapfen mit Rastelement gemäß Fig. 1 in vergrößerter Darstellung,
- Fig. 3, Fig. 3a, Fig. 3b und Fig. 3c: den erfindungsgemäßen Hohlzapfen in verschiedenen Ansichten und
- Fig. 4, Fig. 4a, Fig. 4b und Fig. 4c: den erfindungsgemäßen Hohlzapfen, montiert in einer Aufnahmeöffnung.

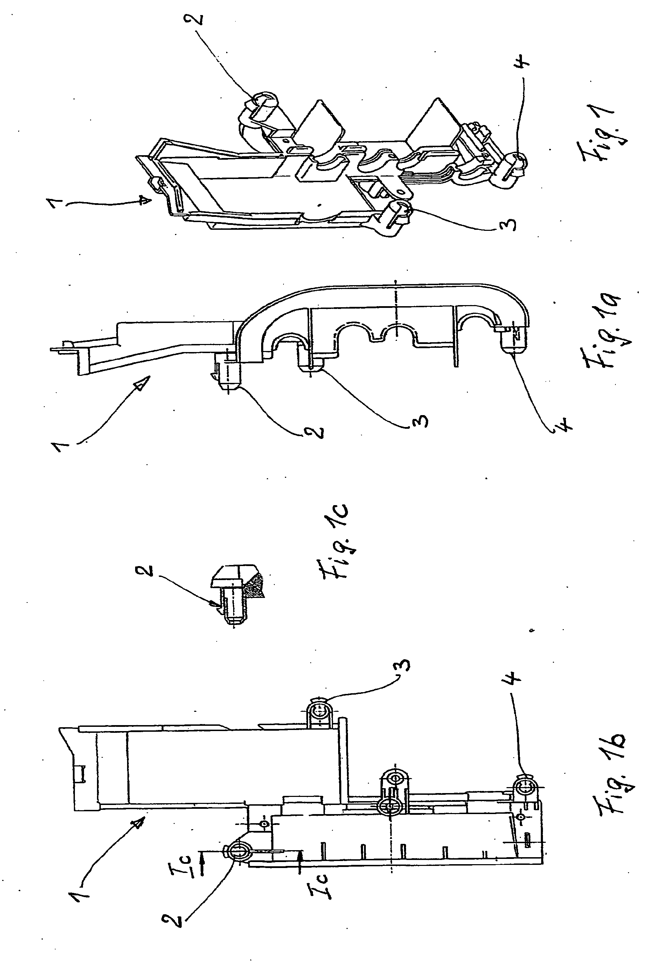

**Fig. 1** zeigt in perspektivischer Darstellung ein Gehäuseteil 1 einer nicht dargestellten Heizungsanlage für ein Kraftfahrzeug. Dieses als Kunststoffspritzteil hergestellte und als Deckel ausgebildete Gehäuseteil 1 weist drei im Bereich einer Trennfuge angeordnete Hohlzapfen 2, 3, 4 auf, welche Teile einer noch zu erläuternden Rastverbindung mit einem weiteren, nicht dargestellten Gehäuseteil sind.

**Fig. 1a** zeigt das Gehäuseteil 1 in einer Seitenansicht, wiederum mit den drei achsparallel angeordneten Hohlzapfen 2, 3, 4.

**Fig. 1b** zeigt das Gehäuseteil 1 in einer Ansicht von oben (Draufsicht), wobei die drei Hohlzapfen 2, 3, 4 als Eckpunkte eines nicht dargestellten Dreiecks erkennbar sind. Durch diese Anordnung lässt sich eine sichere Zentrierung bzw. Positionierung des Gehäuseteiles 1 erreichen.

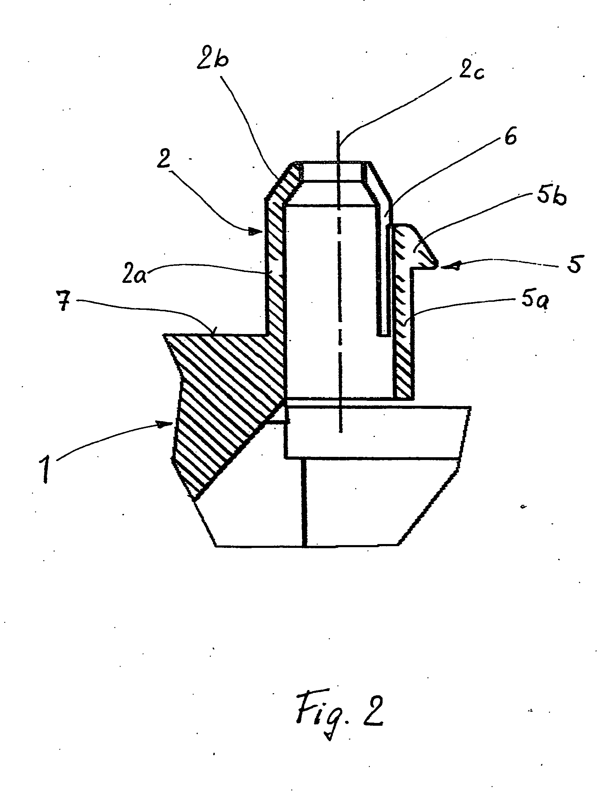

**Fig. 1c** zeigt einen Schnitt durch den Hohlzapfen 2 gemäß der Linie Ic-Ic in Fig. 1b. Dieser Schnitt ist in Fig. 2 vergrößert dargestellt und wird nachfolgend erläutert.

**Fig. 2** zeigt den Schnitt längs der Linie Ic-Ic, um 90 Grad verdreht. Der Hohlzapfen 2 weist einen hohlzylindrischen Teil 2a und einen stirnseitigen, konisch ausgebildeten Teil 2b auf, welcher als Einführschräge dient. Teil des Hohlzylinders 2a ist ein Rastelement 5, welches aus einer Rastzunge 5a und einer Rastnase 5b besteht. Der Hohlzapfen 2 bzw. der zylindrische Teil 2a weisen eine Achse 2c auf, parallel zu welcher ein Längsschlitz 6 in den Hohlzapfen 2 eingearbeitet ist. Ein weiterer Längsschlitz liegt vor der Zeichenebene. Der Hohlzapfen 2 ist einstückig als Kunststoffspritzteil mit dem Gehäuseteil 1 verbunden und bildet mit diesem einen Fuß 7, welcher als Anschlagfläche für das zu verbindende, hier nicht dargestellte Gehäuseteil dient.

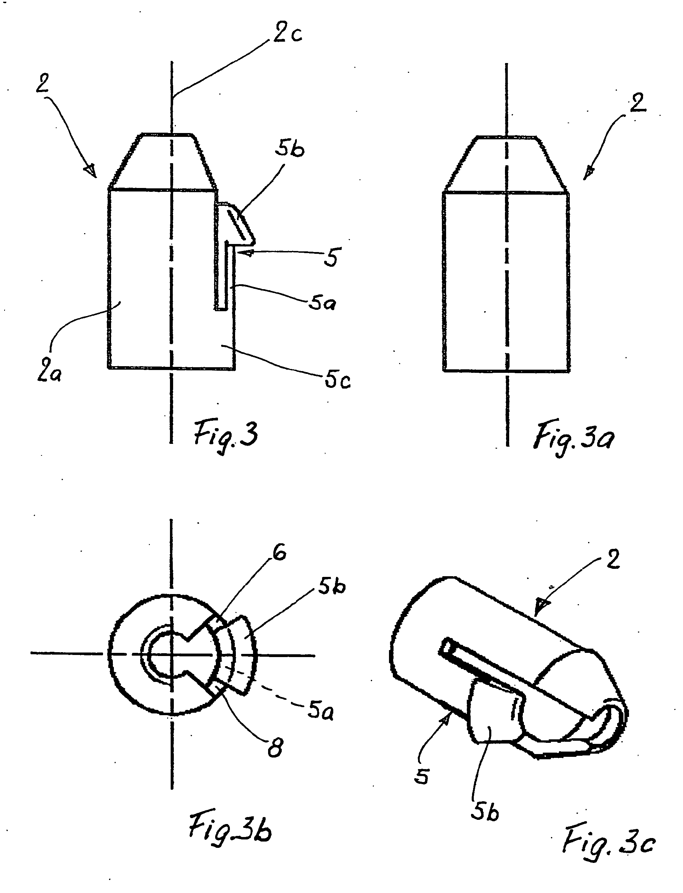

**Fig. 3** zeigt den Hohlzapfen 2 (entsprechend sind die anderen Hohlzapfen 3, 4 ausgebildet) in einer Ansicht - ohne das Gehäuseteil 1. Es werden gleiche Bezugszahlen wie in Fig. 2 verwendet. Das Rastelement 5 mit Rastnase 5b und Rastzunge 5a ist seitlich der Achse 2c angeordnet und in einem unteren Bereich 5c mit dem Hohlzylinder 2a verbunden.

Die **Figuren 3a, 3b** und **3c** zeigen den Hohlzapfen 2 in einer Seitenansicht, in einer Draufsicht und in einer perspektivischen Darstellung. In Fig. 3b ist die Anordnung des Rastelementes 5 mit der Rastnase 5b als Kreissektor gut erkennbar. Beiderseits der Rastzunge 5a und der Rastnase 5b sind die Längsschlitze 6, 8 angeordnet, die der Rastzunge die erforderliche Elastizität zum Einfedem verleihen.

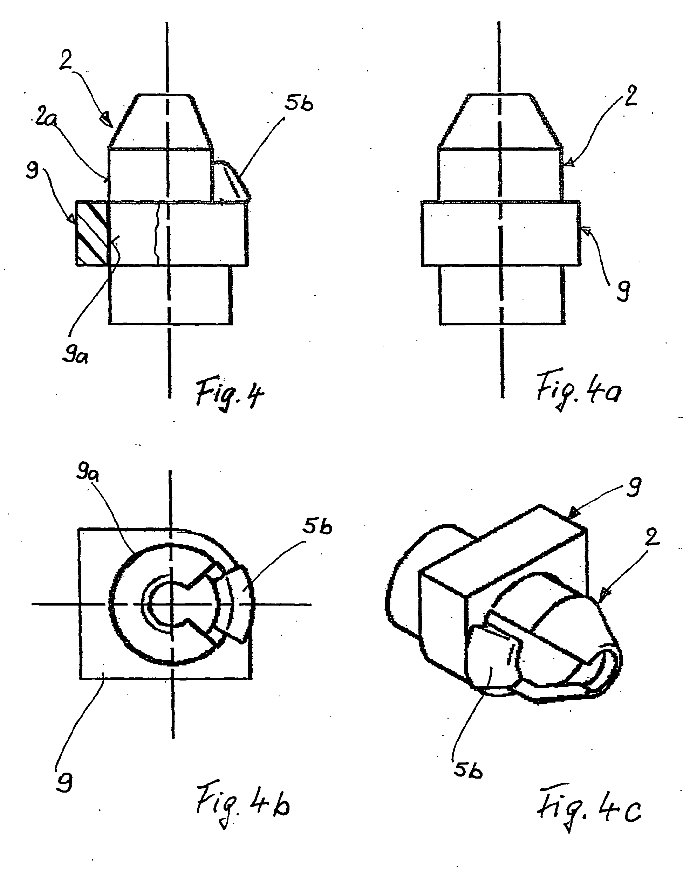

**Fig. 4** zeigt den Hohlzapfen 2 in einer Seitenansicht und teilweise geschnitten, verbunden mit einem zweiten Gehäuseteil 9, von welchem hier schematisch nur ein Ausschnitt dargestellt ist. Dieses Gehäuseteil 9 weist eine Aufnahmeöffnung 9a auf und liegt vorzugsweise auf dem in Fig. 2 dargestellten Fuß 7, der eine Anschlagfläche bildet, auf. Der Hohlzapfen sitzt relativ spielfrei in der Aufnahmeöffnung 9a.

Die **Figuren 4a, 4b, und 4c** zeigen den montierten Hohlzapfen 2 in einer Seitenansicht, in einer Ansicht von oben und in einer perspektivischen Darstellung. Fig. 4 und 4b zeigen, wie die Rastnase 5b das Aufnahmeteil 9 übergreift und damit eine Rastverbindung zwischen beiden Gehäuseteilen herstellt. Je nach Größe und Form der zu verbindenden Gehäuseseite können beliebig viele Hohlzapfen und Aufnahmeöffnungen vorgesehen werden.

## Patentansprüche

1. Klimagehäuse aus Gehäuseteilen mit einer Rasterverbindung, wobei an einem ersten Gehäuseteil (1) mindestens ein Steckerteil und an einem zweiten Gehäuseteil mindestens ein Aufnahmeteil (9) angeordnet sind, **dadurch gekennzeichnet, dass** das Steckerteil als Hohlzapfen (2) mit einer Einführschräge (2b) und einem elastischen Rastelement (5) ausgebildet ist, welches Teil des Hohlzapfens (2) und durch seitliche Längsschlitze (6, 8) begrenzt ist, und dass das Aufnahmeteil (9) eine Aufnahmeöffnung (9a) aufweist.

2. Klimagehäuse nach Anspruch 1, **dadurch gekennzeichnet, dass** der Hohlzapfen (2) einen als Anschlagfläche für das Aufnahmeteil (9) ausgebildeten Fuß (7) aufweist.

3. Klimagehäuse nach Anspruch 1 oder 2, **dadurch gekennzeichnet, dass** das Rastelement (5) eine Rastzunge (5a) und eine Rastnase (5b) aufweist, die in Achsrichtung (2c) des Hohlzapfens (2) versetzt gegenüber der Einführschräge (2b) angeordnet ist.

4. Klimagehäuse nach Anspruch 3, **dadurch gekennzeichnet, dass** der Hohlzapfen (2) einen als Kreisring ausgebildeten Querschnitt aufweist, der durch die Längsschlitze (6, 8) unterbrochen ist.

5. Klimagehäuse nach einem der Ansprüche 1 bis 4, **dadurch gekennzeichnet, dass** die Einführschräge als konische Fläche (2b) ausgebildet ist.

6. Klimagehäuse nach einem der Ansprüche 1 bis 5, **dadurch gekennzeichnet, dass** der Hohlzapfen (2) mit Rastelement (5) an das Gehäuseteil (1) anspritzbar ist.

## Claims

1. An air conditioning housing comprising housing parts having a snap-in connection, at least one plug part being positioned on a first housing part (1) and at least one receiving part (9) being positioned on a second housing part,
**characterised in that**
the plug part is designed as a hollow pin (2) with an insertion taper (2b) and an elastic snap-in element (5) which is part of the hollow pin (2) and is bounded by lateral longitudinal slits (6, 8), and the receiving part (9) has a receiving opening (9a).

2. An air conditioning housing in accordance with claim 1,
**characterised in that**
the hollow pin (2) has a foot (7) designed as a stopping face for the receiving part (9).

3. An air conditioning housing in accordance with claim 1 or 2,
**characterised in that**
the snap-in element (5) has a snap-in tongue (5a) and the snap-in nose (5b) which is positioned offset in relation to the insertion taper (2b) axially (2c) in relation to the hollow pin (2).

4. An air conditioning housing in accordance with claim 3,
**characterised in that**
the hollow pin (2) has a cross section shaped like a circular ring which is interrupted by the longitudinal slits (6, 8).

5. An air conditioning housing in accordance with one of claims 1 to 4,
**characterised in that**
the insertion taper is designed as a conical face (2b).

6. An air conditioning housing in accordance with one of claims 1 to 5,
**characterised in that**
the hollow pin (2) can be injection moulded to the housing part (1) with the snap-in element (5).

## Revendications

1. Carter ou boitier de climatisation constitué de pièces de carter présentant une liaison d'assemblage par encliquetage, au moins une partie mâle d'emmanchement étant agencée sur une première pièce de carter (1) et au moins une partie de réception (9) étant agencée sur une deuxième pièce de carter, **caractérisé en ce que** la partie mâle d'emmanchement est réalisée en tant que tenon creux (2) présentant une rampe inclinée d'insertion (2b) et un élément d'encliquetage (5) élastique, qui fait partie du tenon creux (2) et est délimité par des fentes longitudinales (6, 8) latérales, et **en ce que** la partie de réception (9) présente une ouverture de réception (9a).

2. Carter de climatisation selon la revendication 1, **caractérisé en ce que** le tenon creux (2) présente une embase (7) conçue en tant que surface de butée pour la partie de réception (9).

3. Carter de climatisation selon la revendication 1 ou 2, **caractérisé en ce que** l'élément d'encliquetage (5) présente une languette d'encliquetage (5a) et un mentonnet d'encliquetage (5b) qui est agencé de manière à être décalé par rapport à la rampe inclinée d'insertion (2b), dans la direction axiale (2c) du tenon creux (2).

4. Carter de climatisation selon la revendication 3, **caractérisé en ce que** le tenon creux (2) présente une section transversale en forme d'anneau circulaire, qui est interrompue par les fentes longitudinales (6, 8).

5. Carter de climatisation selon l'une des revendications 1 à 4, **caractérisé en ce que** la rampe inclinée d'insertion est réalisée en tant que surface conique.

6. Carter de climatisation selon l'une des revendications 1 à 5, **caractérisé en ce que** le tenon creux (2) avec l'élément d'encliquetage (5) peut être moulé par injection sur la pièce de carter (1).
